# EUROPÄISCHE PATENTANMELDUNG

(11) **EP 1 780 178 A2**
(43) Veröffentlichungstag der Anmeldung: **02.05.2007**
(21) Anmeldenummer: 06022384.9
(22) Anmeldetag: 26.10.2006
(51) Int. Cl.: C02F 3/02, E03C 1/266

(54) **Klärverfahren und Zersetzungsanlage**

(30) Priorität: 27.10.2005 DE 102005051754
(71) Anmelder: Firma SBM Maschinen GmbH, 87657 Görisried (DE)
(72) Erfinder:
(74) Vertreter: Pfister, Stefan Helmut Ulrich

(57) **Zusammenfassung**

Es wird ein Klärverfahren zur im wesentlichen aeroben Abwasserreinigung eines mit biologischen Abfällen, insbesondere Küchen- und Haushaltsabfällen, versetzten Abwassers sowie, insbesondere zur Durchführung des Verfahrens, eine Zersetzungsanlage beschrieben. Die Zersetzungsanlage weist einen Klärbehälter, der einen Zulauf und einen Ablauf aufweist und eine Lufteinbringungsvorrichtung auf, die am Boden des Klärbehälters Luft einbringt.

## Beschreibung

Die Erfindung bezieht sich auf ein Klärverfahren zur im wesentlichen aeroben Abwasserreinigung eines mit biologischen Abfällen, insbesondere Küchen- und Haushaltsabfällen, verschmutzten Abwassers sowie, insbesondere zur Durchführung des Verfahrens, auf eine Zersetzungsanlage mit einem Klärbehälter, der einen Zulauf und einen Ablauf aufweist und mit einer Lufteinbringungsvorrichtung, die am Boden des Klärbehälters Luft einbringt.

Die DE 199 05 633 C1 beschreibt ein Klärverfahren zur im wesentlichen aeroben Abwasserreinigung in einem Behälter sowie zur Durchführung des Verfahrens eine Zersetzungsanlage. Das Verfahren umfasst die Schritte chargenweises Zuführen von Abwässern am oberen Ende einer Nitrifikationszone, Absinken lassen der zugeführten Abwassercharge in der Nitrifikationszone, stoßweises Belüften am unteren Ende der Nitrifikationszone im Gegenstrom zur absinkenden Abwassercharge durch die Belüftung hervorgerufenes, kurzzeitiges Überströmen von teilweise gereinigtem Abwasser am oberen Ende der Nitrifikationszone in eine nicht belüftete Absinkzone bzw. Umwälzzone. Außerdem ist noch das Absinken lassen des teilweise gereinigten Abwassers in der nicht belüfteten Absinkzone, das Aufströmen von im Wesentlichen gereinigtem Abwasser aus der Absinkzone und der Nitrifikationszone in einer Aufstiegs- bzw. Nachklärzone und das Abführen von gereinigtem Abwasser am oberen Ende der Aufstiegs- bzw. Nachklärzone wichtig.

Die DE 195 23 842 C2 beschreibt eine Abfallbeseitigungsvorrichtung, insbesondere zur Beseitigung von biologisch abbaubaren Küchen- und/oder Haushaltsabfällen mit einer Zerkleinerungseinrichtung und einer Verbindung zu einem Abwassersystem und mit einem Füllbehälter mit einer nicht als Abwasserabfluss dienenden Füllöffnung zum Einfüllen des zu beseitigenden Abfalls, wobei die Zerkleinerungsvorrichtung ein innerhalb des Füllbehälters rotierendes als Pumpenrotor zum Pumpen des zerkleinerten Abfalls ausgebildetes Messer umfasst. Zur Verbindung mit dem Abwassersystem ist eine Abfallbeseitigungsleitung zum Einleiten des zerkleinerten Abfalls in eine Abzweigung einer Abwasserleitung eines Spül- und/oder Waschbeckens vorgesehen.

Aus der DE 202 05 956 U1 ist einen Aufgabestation für eine Bioabfallentsorgungsvorrichtung bekannt. Sie ist vorzugsweise in einem Küchenspülbecken eingebaut und weist eine nachgeschaltete Zerkleinerungsmühle für die Bioabfälle auf.

Aus der Druckschrift AT 403 374 B ist eine kompakte Kleinkläranlage bekannt, die insbesondere für die Reinigung von kommunalen häuslichen Abwässern geeignet ist und die ein Vorklärbecken, ein mit Belüfter versehenes Belebungsbecken und ein Nachklärbecken aufweist, wobei ein Becken mit dem anderen über Durchtrittsöffnungen für die Flüssigkeit verbunden ist. Im Vorklärbecken und gegebenenfalls im Belebungsbecken ist mindestens je ein Mischer angeordnet und eine Pumpleitung verbindet das Nachklärbecken mit dem Vorklärbecken, wobei die Kleinkläranlage vorzugsweise in zylindrischer Bauweise ausgeführt ist.

Alle Kleinkläranlagen aus dem Stand der Technik haben damit einen gemeinsamen Nachteil, dass neben einer ungünstigen und nicht vollständigen Zersetzung der biologischen Abfälle auch eine nicht unerhebliche Geruchsbelästigung zu verzeichnen ist, die einen Einsatz im Haushalt unmöglich macht. Durch den Feststoffaustrag in den Abwasserkanal läuft man Gefahr, dass dieser Abwasserkanal, der in typischer Weise einen Durchmesser von 100 mm hat, verschlammt und in der Folge verstopft. Die bekannten Kleinkläranlagen werden aufgrund ihrer Konstruktion auch nur im Aussenbereich eingesetzt, jedoch muss hier bei speziellen Witterungseinflüssen, zum Beispiel Frost u.s.w. durch konstruktive Massnahmen Rechnung getragen werden.

Der vorliegenden Erfindung liegt die Aufgabe zugrunde, ein Klärverfahren bzw. eine Zersetzungsanlage der Eingangs genannten Art zu verbessern.

Verfahrensmäßig wird diese Aufgabe mit folgenden Schritten gelöst: Zuleiten des verschmutzten Abwassers in den Klärbehälter unterhalb des Wasserspiegels des Klärbehälters, Belüften des Klärbehälters vom Boden des Klärbehälters und Abführen des gereinigten Abwassers. Vorrichtungsgemäß wird die Aufgabe dadurch gelöst, dass der Zulauf für verschmutztes Abwasser derart ausgebildet ist, dass das Abwasser unterhalb des Wasserspiegels des Klärbehälters in den Klärbehälter eingebracht wird.

Dadurch dass das mit biologischen Abfällen versetzte und somit verunreinigte beziehungsweise verschmutzte Abwasser unterhalb des Wasserspiegels dem Klärbehälter zugeleitet wird, wird ein erster wirksamer Geruchsabschluss erzeugt. Somit wird das zumeist küchennahe angeordnete Verfahren nicht als unangenehm empfunden, da keine übelriechenden Emissionen freigesetzt werden. Der Anwenderkomfort ist somit gesteigert. Das Klärverfahren kann in der Nähe eines Spülbeckens in der Küche ablaufen.

Durch den erfindungsgemäßen Vorschlag, der sowohl bei dem Verfahren wie auch bei der erfindungsgemäßen Zersetzungsanlage eingesetzt wird, ergibt sich, dass eine effektive und zuverlässige Geruchsabschottung erreicht ist. Dadurch wird es möglich, dass das erfindungsgemäße Verfahren beziehungsweise die erfindungsgemäße Zersetzungsanlage auch im Innenbereich, zum Beispiel in der Küche u.s.w. einsetzbar wird. In diesem Bereich ist aber eine aufwändige Dämmung, um ein Einfrieren der Zersetzungsanlage im Winter zu vermeiden, nicht notwendig, wodurch sich die Akzeptanz für die Erfindung überraschenderweise erheblich erhöht, da eine effektive Abwasserreinigung ohne grossen bauseitigen Aufwand (zum Beispiel Isolierung eines aussenliegenden Abwasserkastens mit einer entsprechenden Kläranlage) auskommt. Außerdem ist ein Zersetzungsprozess der Abfälle unter nahezu gleichbleibender Raumtemperatur wirksamer als ein Zersetzungsprozess mit zum Teil hohen Temperaturschwankungen.

Durch die Erfindung ist sichergestellt, dass kein unerwünschter Feststoffaustrag in den Kanal erfolgt, wodurch die Gefahr eines Verschlammens oder Zusetzens des Hausanschluss zuverlässig vermieden wird, wodurch ansonsten auftretende aufwändige Wartungs- und Reparaturarbeiten vermieden werden.

Vorteilhafterweise wird das verschmutzte Abwasser über einen Zulauf mit einem Anschluss im Bodenbereich des Klärbehälters zugeleitet. Somit ist sicher gestellt, dass der Geruchsabschluss effizient ist, das heißt, dass er bereits bei gering aufgefülltem Klärbehälter wirksam funktioniert und das Abwasser immer vom Boden her den biologischen Zersetzungsprozess durchlaufen kann und somit gegebenenfalls in einem Mehrkammersystem ein maximal langer Zersetzungsweg zur Verfügung gestellt werden kann.

Bevorzugt ist vorgesehen, über den Wasserspiegel tretendes Abwasser im Klärbehälter, insbesondere großflächig, zu filtern. Somit wird sicher gestellt, dass nur gereinigtes Abwasser abgeführt wird. Eine großflächig angeordnete Filtereinrichtung ist deshalb von Vorteil, da diese einen Abfluss weniger beziehungsweise kaum verstopft und somit ein lang andauernder Betrieb des Klärverfahrens beziehungsweise der Zersetzungsanlage gewährleistet wird. Die Filtereinrichtung ist also bevorzugt an der Wasseroberfläche zumindest in der Kammer mit dem Abfluss angeordnet.

Als großflächig im Sinne der Erfindung wird dabei ein Filter angesehen, der weit mehr als 25 %, in einer bevorzugten Variante mehr als 50 % der Querschnittsfläche des Behälters ausfüllt. Durch eine entsprechend großflächige Ausgestaltung wird der Gefahr eines zu schnellen Verschmutzens des Filters entgegengewirkt und notwendige Revisionsarbeiten auf ein Minimum beschränkt.

Durch die Filtereinrichtung, die in Höhe des Wasserspiegels im Klärbehälter angeordnet ist, wird sicher gestellt, dass nur gereinigtes Abwasser zum Abfluss gelangt und größere mittels der Kläranlage (noch) nicht zersetzte Feststoffe im Klärbehälter, solange bleiben, bis sie entweder vollständig abgebaut bzw. zersetzt sind oder bis eine Revision d.h. Entleerung des Klärbehälters erfolgt. Die Filtereinrichtung ist aus einem grobporigen Kunststoffmaterial, vorzugsweise einem PVC-Schwamm, hergestellt.

Aufgrund der Filterung des biologisch abbaubaren Wassers in einem Klärbehälter werden die Abwasserleitungen vom Ablagern von Feststoffen geschützt, woraus sich eine längere Lebensdauer der Kanalisation, sowie eine Entlastung der örtlichen Kläranlage und Deponie ergibt. Außerdem ist ein autarker Haushalt unabhängig von städtischen Kläranlagen besser realisierbar. Durch die erfindungsgemäße Verfahrensweise wird auch erreicht, dass aufgrund der Zuführung der Abwässer durch die Zuleitung im Boden beziehungsweise am Boden des Klärbehälters nach dem Siphonprinzip ein Geruchsverschluss entsteht, der automatisch wirkt. Es ist nicht notwendig, zusätzliche Entlüftungsmassnahmen am Eingangsbereich, dem Abwasser und gegebenenfalls an der Verbindung zum Zufluss im Hausbereich zu schaffen, um die aus dem Stand der Technik bekannten unangenehmen Geruchsbelästigungen zu vermeiden. Diese werden hier automatisch durch die Anordnung des Zulaufs im Bodenbereich und das Vorsehen des Zulaufs ansonsten oberhalb der Wasseroberfläche komplett vermieden, da hierdurch ein Siphon entsteht und die Wassersäule in dem Zulauf den Geruchsverschluss bildet. Eine solche Lösung ist aus dem Stand der Technik nicht bekannt und wird auch durch diesen nicht nahegelegt. Die Erfindung verbindet damit in hervorragender Weise neben der Lösung der Aufgabe, dass ein Feststoffeintrag in einen Abwasserkanal möglichst wirtschaftlich und dauerhaft, soweit wie möglich, reduziert wird und zum weiteren zusätzlich die Beseitigung der aus dem Stand der Technik bekannten Nachteile der Geruchsbelästigung.

Vorzugsweise werden die Abfälle vor dem Zuführen in den Klärbehälter, insbesondere auf eine Korngröße von 3-10 mm, bevorzugt 4-5 mm, mittels einer Zerkleinerungsvorrichtung zerkleinert. Dadurch wird sichergestellt, dass dem Klärbehälter hinreichend kleine Feststoffe im Abwasser zugeführt werden. Die Abfälle sollten eine möglichst große Oberfläche aufweisen, um im Klärbehälter zersetzt zu werden, deshalb werden sie von der Zerkleinerungsvorrichtung soweit wie möglich zerkleinert. Eine Zerkleinerungsvorrichtung, die ein Mahlwerk oder eine Mühle sein kann, ist aus dem Stand der Technik bekannt und beispielsweise in der DE 195 23 842 C2 oder DE 202 05 956 U1 beschrieben. Die Zerkleinerungsvorrichtung kann entweder ein rotierendes Messer oder eine Schreddervorrichtung oder ein Mahlwerk oder jede andere geeignete Mechanik aufweisen, um eine gewünschte Korngröße (ca. 4 bis 5 mm) des biologisch abbaubaren Materials bereitzustellen.

Die Zerkleinerungsvorrichtung kann auch mittels eines manuell zu betätigendem Schalters eingeschaltet werden.

Vorteilhafterweise, um eine Fäulnisbildung zu reduzieren und den Zersetzungsprozess zu beschleunigen, wird der gesamte Klärbehälter belüftet, gegebenenfalls bei mehreren Kammern werden auch diese Kammern des Klärbehälters belüftet. Um den gesamten Klärbehälter vollständig zu belüften, erfolgt die Belüftung bereits vom Bodenniveau beziehungsweise auf Bodenniveau. Somit wird der gesamte Klärbehälter mit kleinen Luftblasen versetzt.

Vorzugsweise erfolgt die Belüftung des Klärbehälters kontinuierlich bzw. dauerhaft mit einer Lufteinbringungsvorrichtung. Die Lufteinbringungsvorrichtung ist also im gesamten Klärbehälter beziehungsweise in allen Klärkammern angeordnet. Bevorzugt weist die Lufteinbringungsvorrichtung unterhalb des Bodens des Klärbehälters Zufuhrleitungen auf, um Luft auf Bodenniveau in den Klärbehälter einzubringen, wobei aus im Boden des Klärbehälters angeordneten Lufteinbringungslöchern gepumpte Luft ausströmt. Die Lufteinbringungsvorrichtung weist eine kleine, aus dem Stand der Technik bekannte Pumpe auf, die abhängig vom Volumen des Klärbehälters in der Leistung und Größe dimensioniert ist und einen möglichst geringen Energieverbrauch aufweist. Der Leistungsbereich der elektrisch arbeitenden Pumpe, die dauernd arbeiten kann, liegt zwischen 20-100 W, bevorzugt im Bereich von 30-50 W, besonders bevorzugt im Bereich zwischen 35-45 W. Da der Klärbehälter dauerhaft belüftet wird, ist eine kontinuierliche Nitrifikation sicher gestellt.

Vorzugsweise weist die Zerkleinerungsvorrichtung zum Ein- und Ausschalten eines Antriebsmotors der Zerkleinerungsvorrichtung eine Steuerschaltung auf. Die Zerkleinerungsvorrichtung wird aufgrund der Steuerschaltung nur eingeschaltet, wenn biologische Abfälle zugeführt werden. Hierfür könnte ein Sensor bzw. ein Schalter als Aktor vorgesehen sein. Beispielsweise könnte der Aktor mit dem Wasserhahn gekoppelt sein, so dass bei geöffnetem Wasserhahn gleichzeitig die Zerkleinerungsvorrichtung eingeschaltet wird und möglicherweise mit einer entsprechenden Verzögerung wieder ausgeschaltet wird, auch sind optische oder elektronische Sensoren, die bei automatischen Spülbecken üblich sind, als Aktoren einsetzbar.

In einer bevorzugten Varianten der Erfindung ist eine Zerkleinerungsvorrichtung im Abwasserablauf des Spülbeckens vor dem Zulauf des Klärbehälters angeordnet. Die Zerkleinerungsvorrichtung ist dabei zum Beispiel als Zerkleinerungsmühle ausgebildet.

In einer Weiterentwicklung der Erfindung wird vorgeschlagen, dass eine Abfallöffnung vor der Zerkleinerungsvorrichtung angeordnet ist, durch die die Zerkleinerungsvorrichtung direkt mit Bioabfällen beschickt werden kann. Dabei ist die Abfallöffnung von einer derartigen Größe, dass herkömmliche Bioabfälle problemlos aufgenommen werden können. Dadurch kann die Zerkleinerungsvorrichtung alternativ sowohl über die Abfallöffnung wie auch über den Abwasserabfluss des Spülbeckens (gegebenenfalls mit Wasser oder anderen Flüssigkeiten vermengt) mit Bioabfällen beschickt werden.

Damit das Klärverfahren, der Abbau der Feststoffteilchen im Klärbehälter einwandfrei funktioniert, besteht der Klärbehälter aus einem lichtundurchlässigen Material. Der Klärbehälter weist in einer bevorzugten Ausführungsform zwei Trennwände auf, die den Klärbehälter in drei vom Abwasser zu durchlaufende Kammern einteilt.

Eine Trennwand erstreckt sich vom Boden des Klärbehälters und muss vom Abwasser überlaufen werden. Die zweite Trennwand erstreckt sich vom Deckenbereich zum Boden des Klärbehälters hin, wobei die Trennwand beim Bodenbereich offen ist, so dass das Abwasser diesen Bodenbereich des Klärbehälters durchlaufen muss, um zum Ablauf zu gelangen. Das Abwasser im Klärbehälter wird beim Überschreiten der ersten Trennwand aus einer Vorklärkammer in eine Hauptklärkammer übergeleitet. Um entstehende Gase der ersten und zweiten Kammer d.h. der Vorklärkammer und zum Teil der Hauptklärkammer abzuleiten, ist ein Entlüftungskanal zum Ablauf vorgesehen. Die Filtereinrichtung befindet sich in dieser Ausführungsform in der letzten, vom Abwasser zu durchlaufenden dritten Klärkammer in Höhe des Wasserspiegels.

Die biologischen Abfälle werden aufgrund in den Abfällen und im Abwasser enthaltenen und sich bildenden Mikroorganismen im Klärbehälter solange zersetzt, bis die zersetzten Abfälle den grobporigen Filter hindurchpassieren können.

Um den Zersetzungsprozess im Klärbehälter zu verbessern bzw. zu beschleunigen, können Enzyme im Klärbehälter über eine Öffnung im Deckenbereich des Klärbehälters zugesetzt werden. Diese Zusetzung kann natürlich auch über eine Dosiervorrichtung mit einer Steuerung automatisiert werden. Der Klärbehälter kann mindestens eine Revisionsöffnung mit einem zugehörigen Deckel und einer Dichtung aufweisen, um den Klärbehälter von Feststoffen in regelmäßigen Abständen oder je nach Verschmutzungsgrad zu reinigen bzw. die Filtereinrichtung auszutauschen.

Bevorzugt weist der Klärbehälter, abhängig von der Größe des Haushalts, d.h. der im Haushalt lebenden Personen, ein Volumen von ca. 15-50 1, vorzugsweise zwischen 20-25 1 auf. Am Boden des Klärbehälters kann eine Spülpumpe in einem Spülkanal angeordnet sein, der zum Ablauf der Zersetzungsanlage führt. Der Spülkanal kann durch einen Riegel geöffnet werden, um den Klärbehälter in regelmäßigen Abständen in einem Reinigungsvorgang durchzuspülen. Die Intervalle der Spülung können auch durch elektronische Schaltungen mittels Sensoren gesteuert werden.

Bevorzugt weist die Zersetzungsanlage eine Abfallöffnung vor der Zerkleinerungsvorrichtung in einer derartigen Größe auf, so dass auch herkömmliche Bioabfälle aufgenommen werden können. Damit wird der Anteil an Bioabfällen in einer Mülltonne erheblich verringert, womit die Probleme, die mit einer Biomülltonne und der anschließenden Verwertung auf der Deponie einhergehen, vermieden werden.

Vorteilhafterweise ist der Zulauf mit einem ersten Anschluss oberhalb des Wasserspiegels und einem zweiten Anschluss im Bodenbereich des Klärbehälters ausgebildet, um Abwasser in den Klärbehälter einzuführen.

Vorzugsweise sind ein oberer Teil des Zulaufs und der Ablauf auf gleicher Höhe angeordnet. Der Zulauf ist allerdings bis zum Boden des Klärbehälters geführt. Der Klärbehälter ist tieferliegend angeordnet. Dadurch wird ein Siphonprinzip durch die Wassersäule im Zulauf geschaffen, um die Gerüche des Klärbehälters abzudichten.

Bei einer alternativen Ausführungsform, um einen noch effizienteren Geruchsabschluss sicher zu stellen, ist vor beziehungsweise im Zulauf eine kleinere Siphoneinrichtung zwischengeschaltet.

Die Zersetzungsanlage kann im Abflussweg des Abwassers, insbesondere von Küchenspülen, irgendwo im Gebäude angeordnet werden, so dass das Abwasser danach in die Kanalisation geleitet wird. Bevorzugt ist die Zersetzungsanlage derartig dimensioniert, dass sie im wesentlichen unter einem Spülbecken Platz finden kann und insbesondere hinter oder anstelle einer Siphoneinrichtung einer Küchenspüle angeordnet ist und zudem bevorzugt der Abfluß des Spülbeckens als Abfallöffnung dient.

Somit wird eine äußerst effektive Zersetzungsanlage für Küchen-und Haushaltsabfälle mit einem geringen Bau und Bauteilaufwand geschaffen, die die Entsorgung derartiger Abfälle vereinfacht und die örtlichen Entsorgungseinrichtungen sowie die Abwasserkanalisation schont. Ein nachträglicher Einbau ist problemlos möglich.

In einer weiteren bevorzugten Variante der Erfindung ist vorgesehen, dass die Zersetzungsanlage ein geruchsdichtes Gehäuse aufweist und das Gehäuse eine separate Entlüftungsleitung aufweist oder aber eine Entlüftung über den Kanal des Ablaufs erfolgt. Dadurch wird ein optimaler Schutz vor einer unangenehmen Geruchsbelästigung erreicht, eine Entlüftung erfolgt dabei gegebenenfalls entweder über den Abfluss wie im übrigen Abwasserbereich auch, oder aber durch eine separate Entlüftungsleitung, die an geeigneter Stelle das Gebäude verlassen kann. Bei einer alternativen Ausführungsform kann eine Pumpe im Zulauf angeordnet sein, um das Abwasser in den Klärbehälter zu fördern.

Es versteht sich, dass die vorstehend genannten und nachstehend noch zu erläuternden Merkmale nicht nur in der jeweiligen angegebenen Kombination, sondern auch in anderen Kombinationen verwendbar sind.

In diesem Zusammenhang wird insbesondere darauf hingewiesen, daß alle im Bezug auf die Zersetzungsanlage beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche der Zersetzungsanlage berücksichtigt und beansprucht werden und zählen ebenfalls zur Erfindung und zur Offenbarung.

Die Erfindung wird im Folgenden anhand zweier Ausführungsbeispiele unter Bezugnahme auf zwei zugehörige Zeichnungen näher erläutert. Es zeigen:
- Fig. 1: einen Querschnitt einer Zersetzungsanlage nach der Erfindung,
- Fig. 2: einen Querschnitt einer Zersetzungsanlage mit drei Kammern nach der Erfindung,
- Fig. 3: einen Querschnitt einer Zersetzungsanlage gemäß Fig. 2 mit einer separaten Abfallöffnung.

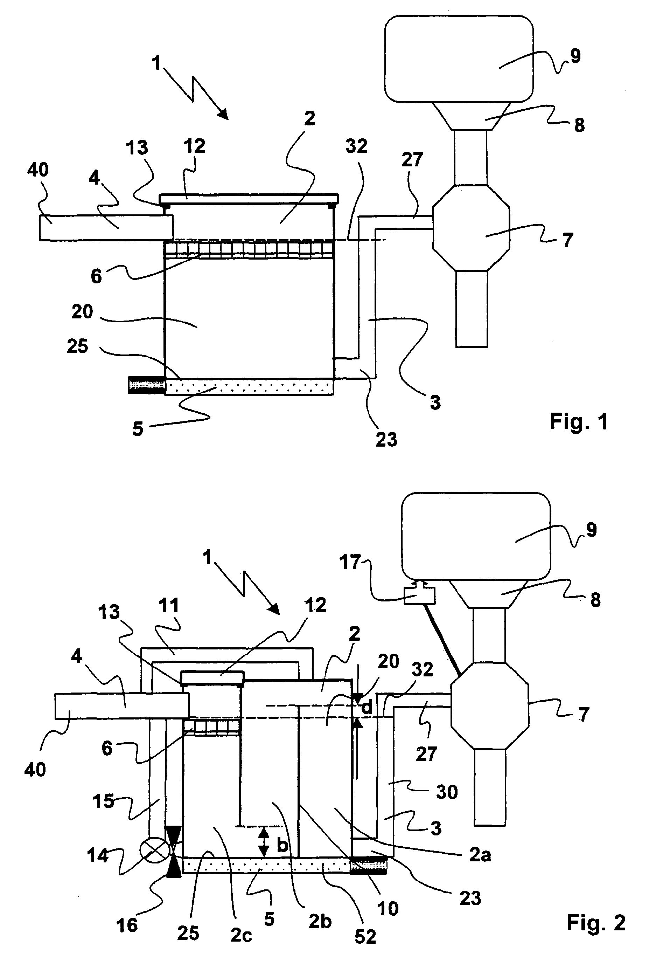

Die Fig. 1 zeigt schematisch eine Zersetzungsanlage 1 mit einem Klärbehälter 2. Der Klärbehälter 2 weist einen Zulauf 3 und einen Ablauf 4 auf. Der Zulauf 3 weist einen ersten Anschluss 27 oberhalb des Wasserspiegels 32 des Klärbehälters 2 auf und führt über einen zweiten Anschluss 23 zum Boden 25 des Klärbehälters 2 hin. Somit wird ein aus den Haushalten bei Spülbecken bekanntes Siphonprinzip geschaffen, um einen Geruchsabschluss zu erzeugen. Der herkömmliche Siphon ist durch die Zersetzungsanlage 1 mit Siphonfunktion ersetzt. Somit ist der Anwenderkomfort erhöht, die Zersetzungsanlage 1 kann in Spülbeckennähe in einer Küche ohne Geruchsemissionen installiert werden. Der Klärbehälter 2 weist in Höhe des Wasserspiegels 32 eine flächige Filtereinrichtung 6 aus vorzugsweise einem grobporigen, flächigem Material auf. Das Material kann PVC sein und ist bevorzugt ein aus der Küchenumgebung bekanntes Schwammmaterial.

Das großflächige Filtermaterial hat den Vorteil, dass der Ablauf 4 nicht verstopft und nur gereinigtes Abwasser 40 durchtreten kann. Auch die Filtereinrichtung 6 verstopft selbst nicht so schnell und kommt ohne zusätzliche, aufwändige Reinigungseinrichtungen aus. Ein stabiler langer Betrieb ist gewährleistet.

Am Boden des Klärbehälters 2 ist eine Lufteinbringungsvorrichtung 5 angeordnet. Die Lufteinbringungsvorrichtung 5 umfasst eine Pumpe bspw. einer Aquariumpumpe, die dauerhaft arbeitet und möglichst wenig Energie verbraucht.

Luftzufuhrleitungen der Lufteinbringungsvorrichtung 5 sind unter dem Boden 25 des Klärbehälters 2 angeordnet, wobei Lufteinbringungsöffnungen 52 im gesamten Boden 25 des Klärbehälters 2 verteilt sind, so dass der gesamte Klärbehälter 2 mit Luft versetzt wird und der Klärbehälter effizient ausgenützt wird, so dass keine Schattenstellen beziehungsweise nicht mit Luft durchströmte Zwischenräume im Klärbehälter entstehen können.

Eine als Mühle ausgebildete Zerkleinerungsvorrichtung 7, ist am Zulauf 3 angeordnet und zerkleinert die von einer Abfallöffnung 8 kommenden biologischen Küchen- und Haushaltsabfälle auf eine Korngröße von 4-5 mm. Die Zerkleinerungsvorrichtung 7 ist im Wesentlichen aus dem Stand der Technik bekannt. Sie ist beispielsweise in der DE 202 05 956 U1 beschrieben und wird unter anderem, unter dem Namen "Sinkmaster" von der Firma SBM Maschinen GmbH angeboten.

Die Abfallöffnung 8 ersetzt die Abflußöffnung eines herkömmlichen Spülbeckens 9. Die Abfallöffnung ist 8 bevorzugterweise größer als eine herkömmliche Spülbeckenabflussöffnung ausgebildet, um größeren biologischen Abfall aufnehmen zu können. Somit wird eine einfache Abfallbeseitigungsvorrichtung zur Entsorgung von biologisch abbaubaren Küchen- und Haushaltsabfällen geschaffen, die die Abfälle im Wesentlichen direkt am Ort entsorgt, an dem die Abfälle anfallen. Das biologisch abbaubare Material wird mit einem minimalen Bauteileinsatz im Spülbecken bereits angefeuchtet, in der Mühle zerkleinert und mit dem Abwasser 30 in den Klärbehälter 2 gespült.

Das Klärverfahren funktioniert folgender Weise: Im Spülbecken werden die biologischen abbaubaren Essensreste und Speisereste in die Abfallöffnung 8 eingegeben. Nachfolgend werden sie in der Zerkleinerungsvorrichtung 7 zerkleinert. Mittels des Spülwassers werden diese zerkleinerten Teile in den Klärbehälter 2 über den Zulauf 3 geführt. Im Klärbehälter 2 werden die biologischen Feststoffteile von Mikroorganismen mit Hilfe einer Luftbeaufschlagung zersetzt. Die Nitrifikation findet grundsätzlich ohne Zugabe von Enzymen statt. Enzyme können aber den Klärungsprozess verbessern und beschleunigen. Es befinden sich ständig Mikroorganismen im alten Abfallwasser 20 in der bzw. den Klärkammern des Klärbehälters 2, die frischen Abfall zersetzten können.

Mittels des Filters 6 wird nur gereinigtes Wasser in den Ablauf 4 gelassen. Aufgrund der Nitrifikation werden im Wesentlichen sämtliche Feststoffteile zersetzt, so dass sich am Boden 25 des Klärbehälters 2 auch nach längeren Zeitperioden kaum Feststoffe absetzen. Aus Versuchen wurde festgestellt, dass sich in einem Zweipersonenhaushalt in einem Zeitraum von einem halben Jahr ca. 250-300 g Feststoff am Boden des Klärbehälters 2 festsetzt.

Die Fig. 2 zeigt eine weitere besondere Ausführungsform der Zersetzungsanlage 1 mit einem Klärbehälter 2, der aufgrund von Trennwänden 10 drei Kammern 2a, 2b, 2c aufweist. Die einzelnen Kammern 2a, 2b, 2c müssen aufgrund der Anordnung der Trennwände 10 - also aufgrund einer Zwangsführung - vom Abwasser 20 durchlaufen werden. Die Trennwand 10 der ersten Kammer 2a erstreckt sich vom Boden 25 her über den Wasserspiegel des Klärbehälters 2, der durch die Höhe des Ablaufs 4 definiert wird, mit einem Abstand d. Das Abwasser 20 muss die Schwelle mit dem Abstand d von der ersten Trennwand 10 überlaufen, um in die zweite Kammer 2b des Klärbehälters 2 zu gelangen. Die zweite Trennwand erstreckt sich vom Deckenbereich des Klärbehälters 2 in Richtung des Bodenbereichs des Klärbehälters 2 mit einem offenen Abstand D zum Boden, so dass das Abwasser 20 diesen Bodenbereich durchlaufen muss, um in die dritte Kammer 2c zu gelangen.

Schwimmend in Höhe des Wasserspiegels 32 der dritten Kammer 2c befindet sich die Filtereinrichtung 6, die nur gereinigtes Abwasser 40 durchlässt. Die Lufteinbringungsvorrichtung 5 führt Luft vom Boden 25 her in alle drei Kammern 2a, 2b, 2c zu. Aufgrund des aeroben Zersetzungsprozesses in allen drei Kammern wird das Abwasser 20 effizienter und schneller gereinigt, eine Fäulnisbildung und damit Geruchsentstehung werden vermieden. Um die Kammern 2a, 2b, 2c optimal zur Zersetzung einzusetzen, strömt die von der Lufteinbringungsvorrichtung 5 erzeugte Luft direkt aus dem Boden 25 des Klärbehälters 2 aus Lufteinbringungslöchern 15 heraus.

Um entstehende Gase der ersten und zweiten Kammer 2a, 2b im Klärbehälter 2 abzuführen, ist ein Entlüftungskanal 11 zum Ablauf 4 des Klärbehälters 2 vorgesehen. Der Klärbehälter 2 weist eine Revisionsöffnung 12 auf, die mit einer Dichtung 13 abgedichtet ist, um den Filter 6 austauschen zu können.

Außerdem ist eine Spülpumpe 14 mit einem Spülkanal 15 vorgesehen, der vom Bodenbereich des Klärbehälters 2 zum Ablauf 4 führt. Der Spülkanal 15 wird durch eine Absperrung 16 die vor der Pumpe 14 angeordnet ist, geöffnet und geschlossen. Mittels des Spülkanals 15 kann der Klärbehälter 2 bei Bedarf gereinigt werden. Natürlich kann auch eine (nicht gezeigte) Steuerung vorgesehen sein, die beim Überschreiten eines messbaren Grenzwerts aufgrund ansteigender Feststoffansammlung die Absperrung 16 zur Reinigung des Klärbehälters 2 öffnet und die Spülpumpe 14 einschaltet. Der Grenzwert der Feststoffansammlung kann mittels bekannten Sensoren festgestellt werden. Die Steuerung schaltet dann nach einer vorgesehen Zeit oder Prozedur die Spülpumpe 14 aus und schließt den Spülkanal mit der Absperrung 16. Bei einer solchen Automatik ist eine Ansteuerung eines zuschaltbaren Reinwasserzulaufs vorgesehen.

Die Zerkleinerungsvorrichtung 7 kann auch aufgrund einer Steuerschaltung 17 ein- und ausgeschaltet werden. Aus dem Stand der Technik sind eine Reihe von Möglichkeiten für eine solche Steuerschaltung 17 bekannt. Das Ein- und Ausschalten der Zerkleinerungsvorrichtung kann mit Hilfe einer Steuerschaltung 17 mit dem Wasserhahn einer Spülbeckens synchronisiert sein, wobei der Ausschaltvorgang günstigerweise zeitverzögert ist. Ein optischer Sensor, wie er aus automatischen Waschbeckenvorrichtungen bekannt ist, kann auch als Aktor für die Steuerung der Zerkleinerungsvorrichtung dienen.

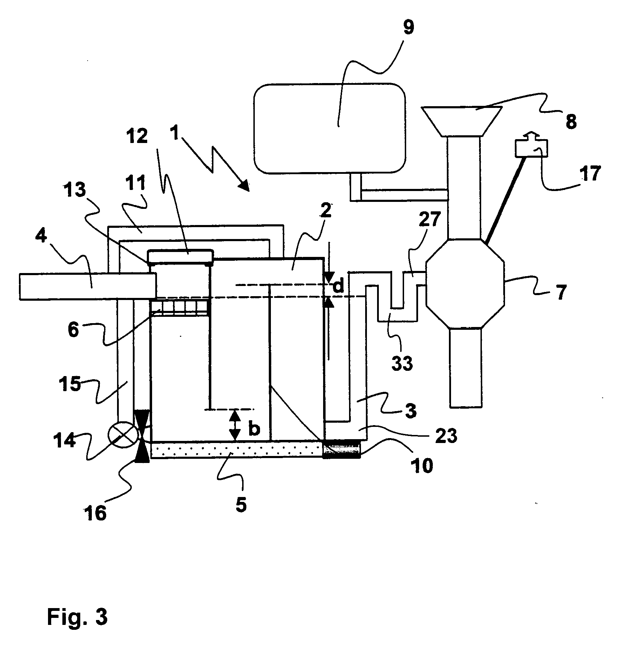

Die Fig. 3 zeigt eine Zersetzungsanlage 1, gemäß der Fig. 2 mit dem Unterschied, daß die Abfallöffnung 8 nicht unter ein Spülbecken 9 angeordnet ist, sondern separat neben einem Spülbecken sich befindet.

Gegebenenfalls kann auch vom Spülbecken 9 Abflußwasser zur Zerkleinerungsvorrichtung 7 zugeführt werden. Jedoch sind das Spülbecken und die Abfallöffnung 8 separat getrennt ausgeführt. Die Steuerschaltung 17 wird manuell betätigt, um die Zerkleinerungsvorrichtung 7 einzuschalten und vorzusgsweie zeitgesteuert auszuschalten. Die Steuerschaltung 17 kann entweder einen Ein-/Ausschalter oder einen Taster umfassen.

Für einen noch effizienteren Geruchsabschluss befindet sich im Zulauf 3 eine weitere kleinere Siphoneinrichtung 33, die sicherstellt, dass auch keine kleineren entstehenden Fäulnisgerüche in die Abfallöffnung 8 gelangen können.

Somit wird eine praktische Zersetzungsanlage mit optimiertem Energie- und Ressourcenverbrauch geschaffen.

Obwohl die Erfindung an Hand von genauen Ausführungsbeispielen beschrieben wurde, die im weitestgehenden Detail dargelegt sind, so wird darauf hingewiesen, daß dies nur zur Erläuterung dient und daß die Erfindung sich nicht notwendigerweise darauf beschränkt, da alternative Ausführungsbeispiele und Vorgehensweisen für Fachleute mit Hinblick auf die Veröffentlichung klar werden. Entsprechend werden Änderungen in Betracht gezogen, die ohne Abweichung vom Inhalt der beschriebenen Erfindung vorgenommen werden können.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Klärverfahren mit einer im Wesentlichen aeroben Abwasserreinigung eines mit biologischen Abfällen verschmutzten Abwassers (30) mit den Schritten, Zuführen der Abfälle im Abwasser in einen Klärbehälter (2), Belüften des Klärbehälters (2) vom Boden des Klärbehälters (2) und Abführen des gereinigten Abwassers (40), **dadurch gekennzeichnet, dass** zum Geruchsabschluss das verschmutzte Abwasser (30) unterhalb des Wasserspiegels (32) des Klärbehälters (2) in den Klärbehälter (2) zugeleitet wird.

2. Klärverfahren nach Anspruch 1, **dadurch gekennzeichnet, dass** das verschmutzte Abwasser (30) über einen Zulauf (3) mit einem Anschluss (23) im Bodenbereich des Klärbehälters zugeleitet wird und/oder das über den Wasserspiegel (32) tretende Abwasser (40) im Klärbehälter(2), insbesondere großflächig, gefiltert wird und/oder die Abfälle vor dem Zuführen in den Klärbehälter (2), insbesondere in eine Korngröße von 3 - 10 mm, bevorzugt 4 - 5 mm, zerkleinert werden und/oder der gesamte Klärbehälter (2) gegebenenfalls mit mehreren Kammern (2a, 2b, 2c) der Klärbehälter (2) belüftet wird.

3. Klärverfahren nach einem oder beiden der vorhergehenden Ansprüche, **dadurch gekennzeichnet, dass** die Belüftung auf Bodenniveau des Klärbehälters (2) erfolgt und/oder die Belüftung des Klärbehälters (2) kontinuierlich erfolgt.

4. Klärverfahren nach einem oder mehreren der vorhergehenden Ansprüche, **dadurch gekennzeichnet, dass** Abfallwasser (20) im Klärbehälter (2) aus einer Vorklärkammer (2a) in eine Hauptklärkammer (2b) übergeleitet wird und/oder Abfallwasser (20) im Klärbehälter (2) aus einer Vorklärkammer (2a) in eine Hauptklärkammer (2b) übergeleitet wird und die entstehenden Gase der Vorklärkammer (2a) zum Ablauf (4) weitergeleitet werden und/oder Enzyme dem Klärbehälter (2) zugesetzt werden.

5. Zersetzungsanlage (1), insbesondere für biologisch abbaubare Küchen- und Haushaltsabfälle, mit einem Klärbehälter (2), der einen Zulauf (3) und einen Ablauf (4) aufweist und mit einer Lufteinbringungsvorrichtung (5), die am Boden des Klärbehälters (2) Luft einbringt, insbesondere zur Durchführung des Verfahrens nach einem oder mehreren der vorhergehenden Ansprüche, **dadurch gekennzeichnet, dass** der Zulauf (3) für verschmutztes Abwasser (30) derart ausgebildet ist, dass das Abwasser (30) unterhalb des Wasserspiegels (32) des Klärbehälters (2) in den Klärbehälter (2) eingebracht wird.

6. Zersetzungsanlage nach Anspruch 5, **dadurch gekennzeichnet, dass** der Zulauf (3) mit einem ersten Anschluss (27) oberhalb des Wasserspiegels (32) und einem zweiten Anschluss (23) im Bodenbereich des Klärbehälters (2) ausgebildet ist, um verschmutztes Abwasser (30) in den Klärbehälter (2) einzuführen und/oder das an der Wasseroberfläche (32) des Klärbehälters (2) zumindest in der Kammer (2c) des Klärbehälters (2) mit dem Ablauf (4), eine, insbesondere großflächige, Filtereinrichtung (6) angeordnet ist.

7. Zersetzungsanlage nach einem oder beiden der vorhergehenden Ansprüche 5 und 6, **dadurch gekennzeichnet, dass** eine Zerkleinerungsvorrichtung (7), vorzugsweise als Zerkleinerungsmühle ausgebildet, im Abwasserablauf vor dem Zulauf (3) des Klärbehälters (2) angeordnet ist.

8. Zersetzungsanlage nach einem oder mehreren der vorhergehenden Ansprüche 5 bis 7, **dadurch gekennzeichnet, dass** die Filtereinrichtung (6) aus einem grobporigen Material, vorzugsweise aus Kunststoffmaterial, insbesondere PVC, hergestellt ist und/oder zum Ein- und Ausschalten der Zerkleinerungsvorrichtung (7) die Zerkleinerungseinrichtung (7) eine Steuerschaltung (17) aufweist und/oder eine Zerkleinerungsvorrichtung (7), vorzugsweise als Zerkleinerungsmühle ausgebildet, im Abwasserablauf vor dem Zulauf (3) des Klärbehälters (2) angeordnet ist und eine Abfallöffnung (8) vor der Zerkleinerungsvorrichtung (7) in derartiger Größe vorgesehen ist, so dass herkömmliche Bioabfälle aufgenommen werden können.

9. Zersetzungsanlage nach einem oder mehreren der vorhergehenden Ansprüche 5 bis 8, **dadurch gekennzeichnet, dass** der Klärbehälter (2) aus einem lichtundurchlässigen Material hergestellt ist und/oder der Klärbehälter (2) zwei Trennwände (14) aufweist, die den Klärbehälter (2) in drei von dem Abwasser zu durchlaufende Kammern (2a, 2b, 2c) einteilen und/oder der Klärbehälter (2) zwei Trennwände (14) aufweist, die den Klärbehälter (2) in drei von dem Abwasser zu durchlaufende Kammern (2a, 2b, 2c) einteilen und die Filtereinrichtung (6) in der letzten Kammer (2c) angeordnet ist und/oder der Klärbehälter (2) mindestens eine Revisionsöffnung mit zugehörigem Deckel und Dichtung, insbesondere für die Filtereinrichtung (6), aufweist und/oder der Klärbehälter (2) zwei Trennwände (14) aufweist, die den Klärbehälter (2) in drei von dem Abwasser zu durchlaufende Kammern einteilen und ein Entlüftungskanal (11) für eine erste und zweite Klärkammer (2a, 2b) vorgesehen ist und/oder der Klärbehälter (2) ein Volumen von ca. 15 bis 50 1, vorzugsweise 20-25 1, aufweist.

10. Zersetzungsanlage nach einem oder mehreren der vorhergehenden Ansprüche 5 bis 9, **dadurch gekennzeichnet, dass** die Lufteinbringungsvorrichtung (5) im gesamten Klärbehälter (2) beziehungsweise in allen Klärkammern angeordnet ist und/oder die Lufteinbringungsvorrichtung (5) unterhalb des Bodens (25) des Klärbehälters (2) Zufuhrleitungen (52) aufweist, um Luft auf Bodenniveau in den Klärbehälter (2) einzubringen und/oder die Lufteinbringungsvorrichtung (5) eine dauernd arbeitende Pumpe aufweist, mit einer Leistung im Bereich von 20-100 Watt, bevorzugt im Bereich von 30-50 Watt, besonders bevorzugt 35-45 Watt.

11. Zersetzungsanlage nach einem oder mehreren der vorhergehenden Ansprüche 5 bis 10, **dadurch gekennzeichnet, dass** vor beziehungsweise im Zulauf (3) eine Siphoneinrichtung (33) zwischengeschaltet ist und/oder ein Teil des Zulaufs (3) und der Ablauf (4) auf gleicher Höhe angeordnet sind, wobei der Klärbehälter (2) tieferliegend angeordnet ist und/oder die Zersetzungsanlage (1) im Wesentlichen unter einem Spülbecken (9), insbesondere hinter oder anstelle einer Siphoneinrichtung angeordnet ist, eine Abfallöffnung (8) in derartiger Größe vorgesehen ist, sodass herkömmliche Bioabfälle aufgenommen werden können und bevorzugt der Abfluß des Spülbeckens als Abfallöffung (8) dient und/oder die Zersetzungsanlage ein geruchsdichtes Gehäuse aufweist und das Gehäuse eine separate Entlüftungsleitung aufweist oder eine Entlüftung über den Ablauf (4) erfolgt.
